# EUROPEAN PATENT SPECIFICATION

(11) **EP 1 697 172 B1**
(45) Date of publication and mention of the grant of the patent: **24.10.2007**
(21) Application number: 04798673.2
(22) Date of filing: 25.11.2004
(51) Int. Cl.: B60R 11/02

(54) **MONITOR SEAT MOUNTING ASSEMBLY**
MONITOR-SITZBEFESTIGUNGSANORDNUNG
ENSEMBLE DE MONTAGE SUR SIEGE POUR MONITEUR

(30) Priority: 24.12.2003 GB 0329986
(43) Date of publication of application: 06.09.2006
(73) Proprietor: Centurion Electronics PLC, Welwyn Garden City Hertfordshire AL7 1LY (GB)
(72) Inventor: CUNNINGHAM, Steven, Centurion Electronics plc, Hertfordshire AL7 1LY (GB)
(74) Representative: Whitaker, Iain Mark
(86) International application number: PCT/GB2004/004971
(87) International publication number: WO 2005/061279

(56) References cited:
- US-A1- 2003 137 584
- US-B1- 6 400 560
- US-B1- 6 529 381
- PATENT ABSTRACTS OF JAPAN vol. 2000, no. 19, 5 June 2001 (2001-06-05) & JP 2001 047921 A (TOYOTA TEKKUSU OSAKA:KK), 20 February 2001 (2001-02-20)

## Description

### Field of the Invention

The present invention concerns improvements in and relating to the mounting of video display monitors to seat backs or headrests.

### Background to the Invention

With the proliferation of relatively low cost ultra compact slim video display monitors using LCD or similar technologies, such display monitors are now encountered in a number of different environments and particularly as part of in-flight, and to a lesser extent, in-car, entertainment systems.

With in-flight entertainment systems the video display monitor is normally embedded into the rear face of the headrest of each passenger seat. The mount normally comprises a rigid plastics moulding defining a shallow recess in which the slim video monitor is held captive but able to pivot through a limited degree of freedom of movement. The mount is otherwise essentially a permanent mount which, although it may provide some access to maintenance engineers with appropriate tools, is not intended to allow demounting of the monitor. Demountability of the monitor would, of course, be undesirable since it could present an opportunity for theft by passengers.

In the context of in-car entertainment, it is only relatively recently that cars have begun to include video display monitors for passenger use. Coaches have had substantially the same seat-back monitors as aircraft for a number of years now. However, for private cars the use of seat back monitors has, until recently, been prohibitively expensive and not regarded as desirable for several reasons including that the driver should not be distracted and that the hardware represents a tempting target for thieves.

Currently the prevalent system for mounting of video display monitors to the back of car seats for the benefit of rear seat passengers is similar to the arrangements used in in-flight and in-coach entertainment - namely semi-permanently or permanently installing the monitor into the head rest. What the manufacturers fail to realise, however, is that by doing this they are exposing the owner to the risk of theft of the monitor by removal of the headrest since in most vehicles the headrest is readily detachable from the seat and the car owner certainly would not regularly remove the headrest from the car to prevent theft.

Document US-B1-6 529 381 discloses an assembly for mounting a video display monitor (12) to the headrest or back of a vehicle seat, which assembly comprises; a mounting plate (16) having a recess to receive a video display monitor and which is fixed in use to the seat headrest or back; and coupling means (locking arms 36) to couple the video display monitor with the mounting plate.

A mounting assembly for mounting a video display monitor to the headrest or seat back of a vehicle seat and which is economical, compact and easy to install while enabling simple and straight forward mounting and demounting of the video display monitor is needed. None of the currently commercially available systems meets these criteria and it is a general objective of the present invention to seek to mitigate or overcome these problems of the existing arrangements.

### Summary of the Invention

According to the present invention there is provided an assembly for mounting a video display monitor to the headrest or back of a vehicle seat, which assembly comprises: a mounting plate having a recess to receive a video display monitor and which is fixed in use to the seat headrest or back; and coupling means to couple the video display monitor with the mounting plate, the coupling means comprising a slide bar which slidingly co-operatively engages with engagement means in the mounting plate and with engagement means at the rear of the video display monitor.

Preferably the engagement means at the rear of the video display monitor comprises a keyway/slot provided on the rear of the video monitor or on an adaptor mounted to the rear of the video monitor

Additionally or alternatively the engagement means in the mounting plate comprises a keyway/slot provided on the mounting plate.

Preferably the engagement means in the mounting plate comprises an aperture through a wall of the mounting plate and more preferably still, a pair of aligned apertures each through a respective opposing wall of the mounting plate. Suitably the apertures are in respective opposing top and bottom walls of the recess of the mounting plate.

Preferably the plate is moulded of a resilient plastics material to minimise impact force should the viewers head strike the display.

Suitably, the slide bar when mounted in the mounting plate and co-operatively engaged with the monitor is readily removable for ease of demountability of the video display monitor from the mounting plate. In the preferred embodiment, the slide bar has a longitudinal shank portion with a forwardly, in use, projecting handle portion whereby the user may readily grip the handle portion of the slide bar to manipulate it into and out of engagement with the engagement means of the mounting plate.

In a second aspect of the present invention there is provided a method of mounting a video display monitor to the headrest of a vehicle seat in which method the video display monitor is mounted to the headrest by first mounting a mounting plate to the headrest or seat back in fixed secure manner, the mounting plate having a recess to receive a video display monitor; and then offering the video display monitor up into the recess of the mounting plate and inserting a slide bar down through engagement means in the mounting plate and into co-operative engagement with engagement means on the rear of the video display monitor, thereby coupling the video display monitor to the mounting plate and hence mounting the video display monitor to the headrest or seat back.

Preferably the method comprises use of a mounting plate of an assembly of the first aspect of the invention.

### Brief Description of the Drawings

The present invention will now be more particularly described, by way of example, with reference to the accompanying drawings, wherein:
Figure 1 is a perspective view of a preferred embodiment of the invention prior to installation; and
Figure 2 is a side elevation view of the embodiment in use, showing the video monitor coupled to the mounting plate.

### Description of the Preferred Embodiment

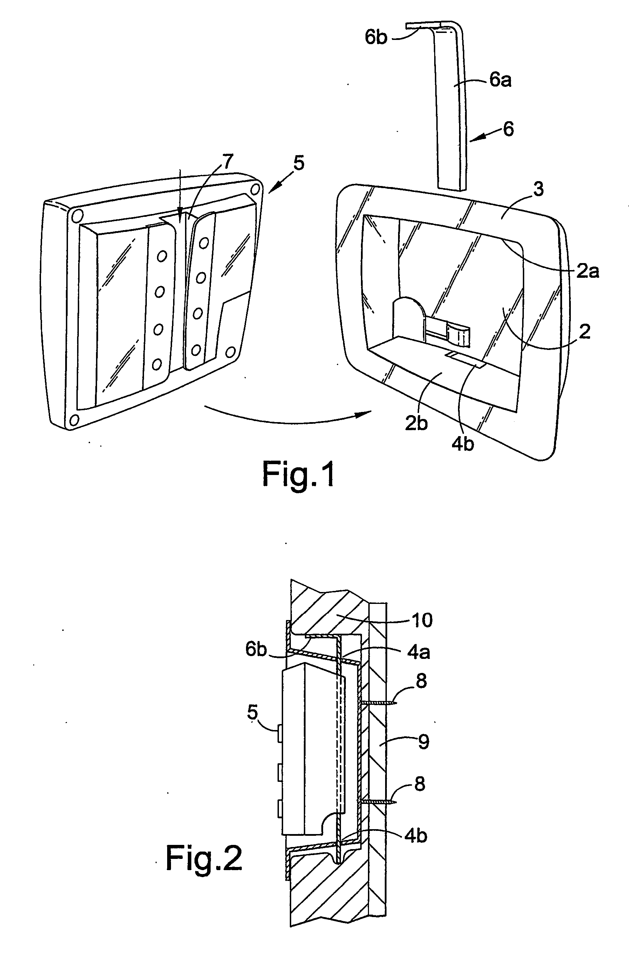

Referring firstly to Figure 1, this shows a mounting plate 1 that serves as an open fronted housing for the video display monitor 5. The mounting plate 1 is formed as a plastics moulding having a generally rectangular shallow tray shape forming a recess 2 to accommodate the small slim video display monitor 5 that is mounted into it. The plate 1 is, for example, suitably of the order of 20-30cm long by 15cm high and with the recess being of the order of 7cm deep and with a 3cm flat laterally extending rim 3 as a border for the screen.

In the opposing top and bottom walls 2a, 2b of the recess of the mounting plate 1 there is provided a pair of opposing corresponding apertures 4a, 4b, each aperture 4a, 4b being a slot to receive the shank 6a of a slide bar 6 extending downwardly therethrough.

Slide bar 6 serves as a tool for coupling together the video display monitor 5 and the mounting plate 1 when the video display monitor 5 is installed in the mounting plate 1, the monitor 5 having been inserted into the recess 2 of the mounting plate 1, and is provided with a handle portion 6b that extends forwardly of the shank 6a of the slide bar 6 so that it may be readily manipulated by the user into an out of engagement with the apertures 4a, 4b.

As can be seen from Figures 1 and 2, the rear surface of the video display monitor 5 is specially moulded to have a key way/slot 7 extending downwardly so that the slide bar shank 6a may be projected down through firstly the upper aperture 4a of the recess 2 of the mounting plate 1 and then down through the keyway 7 in the rear face of the video monitor 5 and finally into/through the aperture 4b of the lower wall of the recess 2 of the mounting plate 1.

The installed configuration of the video monitor 5 and mounting plate 1 can be seen in Figure 2. In Figure 2 the mounting plate 1 is shown as screwed or bolted or otherwise securely fastened to the infrastructure of the seat (here shown as tubular upright frame member 9) through which screws 8 extend. The mounting plate 1 fits into a recess cut into the foam 10 of the seat and access to the handle portion 6b of the slide bar 6 may readily be achieved either through trimming back the seat foam 10 to expose the handle portion 6b of the slide bar 6 or simply allowing it to be accessed through prising back the foam 10 when required. The slide bar 6 may thus be visible or concealed in use but generally accessible for insertion and removal when required to enable easy mounting and demounting of the video display monitor 5 from the mounting plate 1 and hence easy mounting and demounting of the monitor 5 from the seat.

## Claims

1. An assembly for mounting a video display monitor to the headrest or back of a vehicle seat, which assembly comprises: a mounting plate having a recess to receive a video display monitor and which is fixed in use to the seat headrest or back; and coupling means to couple the video display monitor with the mounting plate **characterised in that**, the coupling means comprise a slide bar which slidingly co-operatively engages with engagement means in the mounting plate and with engagement means at the rear of the video display monitor.

2. An assembly as claimed in claim 1, wherein the engagement means at the rear of the video display monitor comprises a keyway/slot provided on the rear of the video monitor or on an adaptor mounted to the rear of the video monitor.

3. An assembly as claimed in claim 1 or 2, wherein the engagement means in the mounting plate comprises a keyway/slot provided on the mounting plate.

4. An assembly as claimed in claim 1,2 or 3, wherein the engagement means in the mounting plate comprises an aperture through a wall of the mounting plate

5. An assembly as claimed in claim 4, wherein a pair of aligned apertures are provided, each through a respective opposing wall of the mounting plate.

6. An assembly as claimed in claim 5, wherein the apertures are in respective opposing top and bottom walls of the recess of the mounting plate.

7. An assembly as claimed in any preceding claim, wherein the plate is moulded of a resilient plastics material.

8. An assembly as claimed in any preceding claim, wherein the slide bar when mounted in the mounting plate and co-operatively engaged with the monitor is readily removable for ease of demountability of the video display monitor from the mounting plate, having a longitudinal shank portion with a forwardly extending handle portion.

9. A method of mounting a video display monitor to the headrest of a vehicle seat in which method the video display monitor is mounted to the headrest by first mounting a mounting plate to the headrest or seat back in fixed secure manner, the mounting plate having a recess to receive a video display monitor; and then offering the video display monitor up into the recess of the mounting plate and inserting a slide bar down through engagement means in the mounting plate and into co-operative engagement with engagement means on the rear of the video display monitor, thereby coupling the video display monitor to the mounting plate and hence mounting the video display monitor to the headrest or seat back.

10. A video display monitor having a keyway/slot thereon adapted to mount the monitor to the rear of a vehicle headrest or back of a vehicle seat for use in the method of Claim 9.

11. An assembly for mounting a video display monitor as claimed in any of Claims 1 to 8 in combination with a video display monitor of Claim 10.

## Patentansprüche

1. Anordnung zur Befestigung eines Videoanzeige-Monitors an der Kopfstütze oder Rückseite eines Fahrzeugsitzes, wobei die Anordnung Folgendes umfasst: eine eine Vertiefung zur Aufnahme eines Videoanzeige-Monitors aufweisende Befestigungsplatte, die im Gebrauch an der Kopfstütze oder Rückseite des Sitzes befestigt ist, und Kopplungseinrichtungen zum Koppeln des Videoanzeige-Monitors mit der Befestigungsplatte,
**dadurch gekennzeichnet, dass** die Kopplungseinrichtungen eine Schiebestange umfassen, die verschiebbar und zusammenwirkend mit Eingriffseinrichtungen in der Befestigungsplatte und mit Eingriffseinrichtungen an der Rückseite des Videoanzeige-Monitors in Eingriff kommt

2. Anordnung nach Anspruch 1, bei der die Eingriffseinrichtungen an der Rückseite des Videoanzeige-Monitors eine Keilnut / einen Schlitz umfassen, der auf der Rückseite des Videoanzeige-Monitors oder an einem Adapter vorgesehen ist, der an der Rückseite des Videoanzeige-Monitors befestigt ist.

3. Anordnung nach Anspruch 1 oder 2, bei der die Eingriffseinrichtungen in der Befestigungsplatte eine Keilnut / einen Schlitz umfassen, die bzw. der auf der Befestigungs-platte vorgesehen ist.

4. Anordnung nach Anspruch 1, 2 oder 3, bei der die Eingriffeinrichtungen in der Befestigungsplatte eine Öffnung durch eine Wand der Befestigungsplatte hindurch umfassen.

5. Anordnung nach Anspruch 4, bei der ein Paar von miteinander ausgerichteten Öffnungen, jeweils durch eine von jeweils gegenüberliegenden Wänden der Befestigungsplatte, vorgesehen ist.

6. Anordnung nach Anspruch 5, bei der die Öffnungen in jeweiligen gegenüberliegenden oberen und unteren Wänden der Vertiefung der Befestigungsplatte vorgesehen sind.

7. Anordnung nach einem der vorhergehenden Ansprüche, bei der die Platte aus elastischem Kunststoffmaterial geformt ist.

8. Anordnung nach einem der vorhergehenden Ansprüche, bei der die Schiebestange bei Ihrer Befestigung in der Befestigungsplatte und im zusammenwirkenden Eingriff mit dem Monitor leicht entfernbar ist, um einen leichten Ausbau des Videoanzeige-Monitors aus der Befestigungsplatte zu ermöglichen, wobei die Schiebestange einen längsverlaufenden Schaftabschnitt mit einem sich nach vorne erstreckenden Handgriff-Abschnitt aufweist.

9. Verfahren zur Befestigung eines Videoanzeige-Monitors an der Kopfstütze eines Fahrzeugsitzes, wobei bei dem Verfahren der Videoanzeige-Monitor an der Kopfstütze zunächst eine Befestigungsplatte an der Kopfstütze oder der Sitz-Rückseite in einer festen sicheren Weise befestigt wird, wobei die Befestigungsplatte eine Vertiefung zur Aufnahme eines Videoanzeige-Monitors aufweist; und nachfolgend der Videoanzeige-Monitor in die Vertiefung der Befestigungsplatte eingebracht und eine Schiebestange nach unten durch Eingriffseinrichtungen in der Befestigungsplatte und in zusammenwirkenden Eingriff mit Eingriffeinrichtungen auf der Rückseite des Videoanzeige-Monitors hindurch eingesetzt wird, wodurch der Videoanzeige-Monitor mit der Befestigungsplatte gekoppellt und damit der Videoanzeige-Monitor an der Kopfstütze oder Sitz-Rückseite befestigt wird.

10. Videoanzeige-Monitor, der eine daran angeordnete Keilnut / einen daran angeordneten Schlitz aufweist, die beziehungsweise der zur Befestigung des Monitors an der Rückseite einer Fahrzeug-Kopfstütze oder an der Rückseite eines Fahrzeugsitzes ausgebildet ist, zur Verwendung bei dem Verfahren nach Anspruch 9.

11. Anordnung zur Befestigung eines Videoanzeige-Monitors nach einem der Ansprüche 1 bis 8 in Kombination mit einem Videoanzeige-Monitor nach Anspruch 10.

## Revendications

1. Ensemble de montage d'un moniteur vidéo sur l'appuie-tête ou le dossier d'un siège de véhicule, lequel ensemble comprend : une plaque de montage ayant un évidement destiné à recevoir un moniteur vidéo et qui est fixée lors de l'utilisation à l'appuie-tête ou au dossier du siège ; et des moyens de couplage pour coupler le moniteur vidéo à la plaque de montage, **caractérisé en ce que** les moyens de couplage comprennent une barre coulissante qui s'emboîte de manière coopérative et coulissante avec des moyens d'emboîtement dans la plaque de montage et avec des moyens d'emboîtement à l'arrière du moniteur vidéo.

2. Ensemble selon la revendication 1, dans lequel les moyens d'emboîtement à l'arrière du moniteur vidéo comprennent un chemin de clavette/fente agencé à l'arrière du moniteur vidéo ou sur un adaptateur monté à l'arrière du moniteur vidéo.

3. Ensemble selon la revendication 1 ou 2, dans lequel les moyens d'emboîtement dans la plaque de montage comprennent un chemin de clavette/fente agencé sur la plaque de montage.

4. Ensemble selon la revendication 1, 2 ou 3, dans lequel les moyens d'emboîtement dans la plaque de montage comprennent une ouverture à travers une paroi de la plaque de montage.

5. Ensemble selon la revendication 4, dans lequel une paire d'ouvertures alignées sont agencées, chacune à travers une paroi opposée respective de la plaque de montage.

6. Ensemble selon la revendication 5, dans lequel les ouvertures sont dans les parois supérieure et inférieure opposées respectives de l'évidement de la plaque de montage.

7. Ensemble selon l'une quelconque des revendications précédentes, dans lequel la plaque est moulée au moyen d'un matériau plastique résilient.

8. Ensemble selon l'une quelconque des revendications précédentes, dans lequel la barre coulissante, une fois montée dans la plaque de montage et emboîtée de manière coopérative avec le moniteur, est facilement amovible pour permettre un démontage facile du moniteur vidéo de la plaque de montage, ayant une partie de tige longitudinale avec une partie de poignée s'étendant vers l'avant.

9. Procédé de montage d'un moniteur vidéo sur l'appuie-tête d'un siège de véhicule, dans lequel le moniteur vidéo est monté sur l'appuie-tête tout d'abord au moyen du montage d'une plaque de montage sur l'appuie-tête ou le dossier de siège de manière fixe et sûre, la plaque de montage ayant un évidement de manière à recevoir un moniteur vidéo ; et ensuite par l'introduction du moniteur vidéo par le haut dans l'évidement de la plaque de montage et l'insertion d'une barre coulissante vers le bas à travers des moyens d'emboîtement dans la plaque de montage et dans un emboîtement coopératif avec des moyens d'emboîtement situés à l'arrière du moniteur vidéo, couplant ainsi le moniteur vidéo à la plaque de montage et montant ainsi le moniteur vidéo sur l'appuie-tête ou le dossier du siège.

10. Moniteur vidéo ayant un chemin de clavette/fente adapté pour fixer le moniteur à l'arrière d'un appuie-tête ou d'un dossier de véhicule pour une utilisation dans le procédé de la revendication 9.

11. Ensemble de montage d'un moniteur vidéo selon l'une quelconque des revendications 1 à 8, combiné à un moniteur vidéo selon la revendication 10.
